# EUROPEAN PATENT SPECIFICATION

(11) **EP 0 684 284 B1**
(45) Date of publication and mention of the grant of the patent: **24.07.2002**
(21) Application number: 95303394.1
(22) Date of filing: 22.05.1995
(51) Int. Cl.: C08L 67/06, C08G 65/32

(54) **Synergistic blends of unsaturated polyetherester resins and dicyclopentadiene polyester resins**
Synergistische Mischungen von ungesättigten Polyetherester Harzen und Dicyclopentadienepolyesterharzen
Mélanges synergiques de polyétheresters insaturés et de polyester à groupes cyclopentadiène

(30) Priority: 25.05.1994 US 248949
(43) Date of publication of application: 29.11.1995
(73) Proprietor: ARCO Chemical Technology, L.P., Greenville, Delaware 19807 (US)
(72) Inventor: Yang, Lau S., Wilmington, DE 19810 (US)
(74) Representative: Colmer, Stephen Gary

(56) References cited:
- EP-A- 0 097 909
- EP-A- 0 186 165
- EP-A- 0 430 906
- DE-A- 3 800 084

## Description

The invention relates to polymer blends useful in making thermoset polymers. In particular, the invention relates to synergistic polymer blends of dicyclopentadiene polyester resins and unsaturated polyetherester resins. The blends are especially valuable for making cured thermoset resins with improved strength and flexibility.

### Background of the Invention:

Recently, we described new unsaturated polyetherester resins made by reacting polyether polyols and unsaturated anhydrides in the presence of a Lewis acid catalyst (see U.S. Patent No. 5,319,006). The anhydride inserts randomly into the polyether chain, resulting in a polyetherester product. The degree of unsaturation in the product is easily controlled by varying the relative proportions of polyether polyol and cyclic, unsaturated anhydride. These polyetheresters can be cured as conventional unsaturated polyesters; the unsaturated polyetherester resin is simply heated with a vinyl monomer, usually styrene, and a free-radical initiator under conditions effective to produce a cured polyetherester product. The cured polyetherester product often has good strength and flexibility compared with conventional cured polyesters because of the presence of polyether moieties.

For some applications, the usefulness of cured polyetherester products is limited by their inherent flexibility. A product with greater stiffness, i.e., higher tensile and flexural modulus properties, is sometimes needed. One way to accomplish this result is to blend in a second, high-modulus resin, compatible with the first resin, that will provide a cured product with higher overall stiffness compared with a polyetherester alone.

Dicyclopentadiene (DCPD) polyester resins are relatively rigid resins made by reacting dicyclopentadiene, ethylenically unsaturated dicarboxylic acids and compounds having two groups each containing a reactive (Zerewitinoff) hydrogen atom reactive with carboxylic acid groups. The acid may be obtained from the corresponding anhydride and water. DCPD polyesters made from DCPD, maleic anhydride, water, and a glycol such as propylene glycol, in particular, are widely used resins (about 300 MM lbs./yr.) because they provide acceptable properties and they are relatively cheap. In addition to the economic benefit, DCPD polyester resins offer low shrinkage, corrosion resistance, moisture resistance, and good high-temperature performance. A key disadvantage of DCPD polyester resins is their brittleness.

Because DCPD polyester resins are generally stiffer than polyetherester resins, one might expect that a blend of a polyetherester and a DCPD polyester resin, if compatible, would produce cured products with physical properties of intermediate value compared with properties of products made from either of the two resins alone. A 50/50 blend of a polyetherester resin and a DCPD polyester resin, for example, should give a cured product having tensile modulus, tensile strength, flexural modulus, and flexural strength that are about equal to an average value of the properties observed when either resin is used alone to make the cured product.

Still needed in the art are cost-effective ways to make polyetheresters having higher stiffness and greater strength. Also needed are ways to impart much-needed toughness to DCPD polyester resins.

### Summary of the Invention:

The invention is a polymer blend which comprises an unsaturated polyetherester resin and a dicyclopentadiene (DCPD) polyester resin. The invention also includes a cured thermoset resin made by reacting the polymer blend with a vinyl aromatic monomer in the presence of a free-radical initiator.

As expected, blends of polyetheresters and DCPD polyester resins give cured resins with greater stiffness (higher modulus) than cured resins based on polyetheresters alone. The strength properties of cured products made using the polymer blends, however, are much greater than expected. The tensile and flexural strength of cured resins made from polyetherester/DCPD polyester blends are substantially higher than the tensile and flexural strengths of cured resins made from either polymer alone.

The synergism resulting from polymer blending provides a cost-effective way to improve both the stiffness and strength properties of cured polyetherester resins. At the same time, the invention offers a way to improve the flexibility and toughness of cured DCPD polyester resins.

### Detailed Description of the Invention:

Unsaturated polyetherester resins are used in the polymer blends and cured thermoset resins of the invention. Suitable unsaturated polyetherester resins are the reaction products of polyethers and unsaturated anhydrides or unsaturated di- or polycarboxylic acids. U.S. Patent No. 5,319,006, describes a process for making unsaturated polyetherester resins. A polyether, such as a polyether polyol, reacts with a cyclic, unsaturated anhydride (such as maleic anhydride) in the presence of a Lewis acid catalyst. The anhydride inserts randomly into the polyether chain to give an unsaturated polyetherester resin. Suitable polyethers, cyclic unsaturated anhydrides, and Lewis acid catalysts for making the unsaturated polyetherester resins are described in the reference. Example A, below, illustrates this process.

Suitable unsaturated polyetherester resins can be made by processes other than Lewis acid-catalyzed anhydride insertion into polyethers. For example, an unsaturated polyetherester resin could be made by simple condensation polymerization by reacting a low molecular weight polyol such as tripropylene glycol with an unsaturated dicarboxylic acid or anhydride such as maleic anhydride. Preferred unsaturated polyetherester resins are made by insertion of anhydrides or dicarboxylic acids into polyethers. European patent application 95301948.6, describes additional insertion methods for preparing unsaturated polyetherester resins.

Dicyclopentadiene (DCPD) polyester resins are also used in the polymer blends and cured thermoset resins of the invention. DCPD polyester resins are well-known rigid resins made by reacting dicyclopentadiene with, for example, maleic anhydride, water, and a glycol (usually propylene glycol, ethylene glycol, diethylene glycol, dipropylene glycol, or mixtures of these). The process is performed under conditions effective to first generate maleic acid and form dicyclopentadiene maleate; the maleate ester is then esterified with the glycol and isomerized during the latter stages of the reaction.

Any desired type or grade of DCPD polyester resin can be used in the polymer blends and cured resins of the invention. Suitable resins are commercially available from many suppliers, including, for example, GLS Fiberglass (Woodstock, Illinois). The preparation of DCPD polyester resins is described, for example, in U.S. Patent Nos. 3,933,757, 3,347,806, 3,883,612, 4,029,848, 4,148,765, 4,348,499, and 4,246,367.

Polymer blends of the invention are prepared by combining an unsaturated polyetherester resin and a DCPD polyester resin. Because DCPD polyester resins are generally available as solutions in styrene, blending is usually accomplished by mixing styrene solutions of the resins. Vinyl aromatic monomers other than styrene (e.g., vinyl toluene, chlorostyrenes, chlorotoluenes, etc.) can be used instead of or in addition to styrene, but styrene is generally preferred. The polymer blend solutions can be used immediately to make a cured thermoset resin by adding a free-radical initiator. If desired, the solution can be stored until needed; in this case, it is preferred to add a free-radical inhibitor (p-benzoquinone, hydroquinone, methoxyphenol, BHT, phenothiazine, or the like, or mixtures of these) to the solution to prevent polymerization and promote storage stability. Blending of the polymers can also be accomplished in the absence of a solvent by heating and mixing the polymers at a temperature effective to produce a molten mixture.

The unsaturated polyetherester resin and the DCPD polyester resin can be used in any desired relative proportion. Blends of these polymers generally give cured thermoset resins having better tensile and flexural strengths compared with the strength properties of cured thermoset resins made from either the unsaturated polyetherester or the DCPD resin alone. Polymer blends of the invention generally comprise from about 1 to about 99 wt.% of an unsaturated polyetherester resin and from about 99 to about 1 wt.% of a dicyclopentadiene unsaturated polyester resin. More preferred polymer blends comprise from about 25 to about 75 wt.% of the unsaturated polyetherester resin and from about 75 to about 25 wt.% of the DCPD unsaturated polyester resin. Most preferred are polymer blends which comprise from about 40 to about 60 wt.% of the unsaturated polyetherester resin and from about 60 to about 40 wt.% of the DCPD unsaturated polyester resin.

The invention includes cured thermoset resins made by reacting the polymer blends of the invention with a vinyl aromatic monomer in the presence of a free-radical initiator. Vinyl aromatic monomers useful in the invention include styrene, vinyl toluene, chlorostyrenes, tert-butylstyrene, dimethylstyrenes, divinylbenzene, and the like, and mixtures thereof. Styrene is particularly preferred. The vinyl aromatic monomer is used in an amount effective to give a cured thermoset resin when reacted with the polymer blend in the presence of a free-radical initiator. Preferably, the amount of vinyl aromatic monomer used is within the range of about 10 to about 70 wt.% based on the amount of cured thermoset resin. A more preferred range is from about 20 to about 60 wt.%; most preferred is the range from about 30 to about 50 wt.%.

Useful free-radical initiators are those well known in the unsaturated polyester industry, and include peroxide and azo-type initiators. Peroxide initiators are preferred because of their lower cost. Suitable peroxide initiators include, for example, methyl ethyl ketone peroxide, benzoyl peroxide, tert-butyl perbenzoate, tert-butylperoxide, and the like, and mixtures thereof. The initiator is used in an amount effective to react the vinyl aromatic monomer and polymer blend to produce a cured thermoset resin. Typically, the amount is within the range of about 0.5 to about 3 wt.% based on the amount of resin prepared; a more preferred range is from about 1 to about 2 wt.%.

An accelerator is often used in addition to the free-radical initiator to allow curing at lower temperatures. Examples of these accelerators, which are well known in the art, include dimethyl aniline and salts of transition metals (cobalt, iron, manganese, copper, zinc, or vanadium), such as cobalt naphthenate, cobalt octanoate, and the like.

The cured thermoset resins are made by reacting the polymer blend, vinyl aromatic monomer, and free-radical initiator under conditions effective to produce a cured thermoset resin. As shown in Examples 2-5, the resins can be made by curing at room temperature in the presence of MEK peroxide and cobalt naphthenate. If desired, the catalysis can be adjusted to allow the curing reaction to be performed at elevated temperatures. After the initial curing reaction is complete, the product is optionally post-cured at elevated temperature (100°C to 140°C) to more rapidly achieve ultimate physical properties.

Optionally, various additives are included in the cured thermoset resins of the invention. The additives may comprise a major portion of the cured thermoset resin. Reinforcing agents such as glass fabrics, chopped glass, or organic fibers can be included. Other additives include fire retardants (phosphorus or antimony compounds, alumina trihydrate, halogenated waxes, etc.), pigments, colorants, mold release agents, inert fillers (calcium carbonate, clays, talc, etc.), low-profile or low-shrink additives, thickeners (magnesium oxide, magnesium hydroxide, calcium oxide, etc.), and the like.

Because DCPD polyester resins are relatively inexpensive, the invention provides a way to enhance the stiffness and strength of cured products made predominantly with polyetherester resins by blending in enough DCPD polyester resin to enhance these properties. Strength properties generally continue to improve until the amounts of DCPD polyester resin and polyetherester resin are about equal. Viewed from a different angle, the invention provides a way to impart much-needed flexibility to cured products made with mostly DCPD polyester resins. Blending in some unsaturated polyetherester resin with conventional DCPD polyester resins makes the cured product much more flexible and overcomes the problem of brittleness, currently a key disadvantage of cured products made from DCPD polyester resins alone.

The following examples merely illustrate the invention. Those skilled in the art will recognize many variations that are within the spirit of the invention and scope of the claims.

### Example A. Preparation of an Unsaturated Polyetherester Resin

A 4-liter resin reactor is charged with ARCOL 16-52 polyol (PO-based polyether triol that includes 10% of ethylene oxide recurring units, hydroxyl number = 52 mg KOH/g, 2150 g), maleic anhydride (931 g), 50% phosphoric acid (490 mg), and zinc chloride (31 g). The reaction mixture is heated at 175°C for 11 h until the acid number drops to 145 mg KOH/g. Propylene glycol (315 g) is added, and the mixture is heated to 185°C for 4 h until the acid number drops to 50 mg KOH/g. The product is cooled to about 100°C and is mixed with styrene to give a solution containing about 60 wt.% polyetherester resin and about 40 wt.% styrene. Hydroquinone (100 ppm) and methoxyphenol (100 ppm) are added to stabilize the resin solution.

### Examples 1-5. Preparation of Cured Thermoset Resins

The polyetherester resin/styrene solution of Example A is mixed with a commercial dicyclopentadiene polyester resin prepared from maleic anhydride, water and a glycol (obtained from GLS Fiberglass, Woodstock, Illinois) to form polymer blends having the resin proportions shown in Table 1. To each solution is added 0.3% cobalt naphthenate (6% Co) and 1% methyl ethyl ketone peroxide solution (Atochem DDM-9 peroxide). The mixtures are then poured into glass molds and cured overnight at room temperature. The samples are post-cured at 100°C for 3 h. The physical properties of the cured thermoset resins, as measured by ASTM Test procedures D638 and D790, appear in Table 1.

As shown in the table, the tensile and flexural modulus properties increase almost linearly with the proportion of DCPD resin in the blend. This result is predicted from the tensile and flexural modulus values of either the polyetherester or DCPD resin alone.

The tensile and flexural strengths (stress at break) of cured thermoset resins based on the blends, however, are much higher than expected based on the strengths of the cured resins made from either unblended polymer. In fact, a 50/50 blend of the polymers gives a 68% increase in flexural strength compared with the DCPD resin, and a 52% increase compared with the polyetherester resin. The improvement in tensile strength of the 50/50 blend is also remarkable: tensile strength increases 44% compared with the DCPD resin, and 92% compared with the polyetherester resin. Synergism between the two types of resins results in unexpectedly high strength properties for the cured resins made from DCPD/polyetherester blends.

The preceding examples are meant as illustrations; the following claims define the scope of the invention.

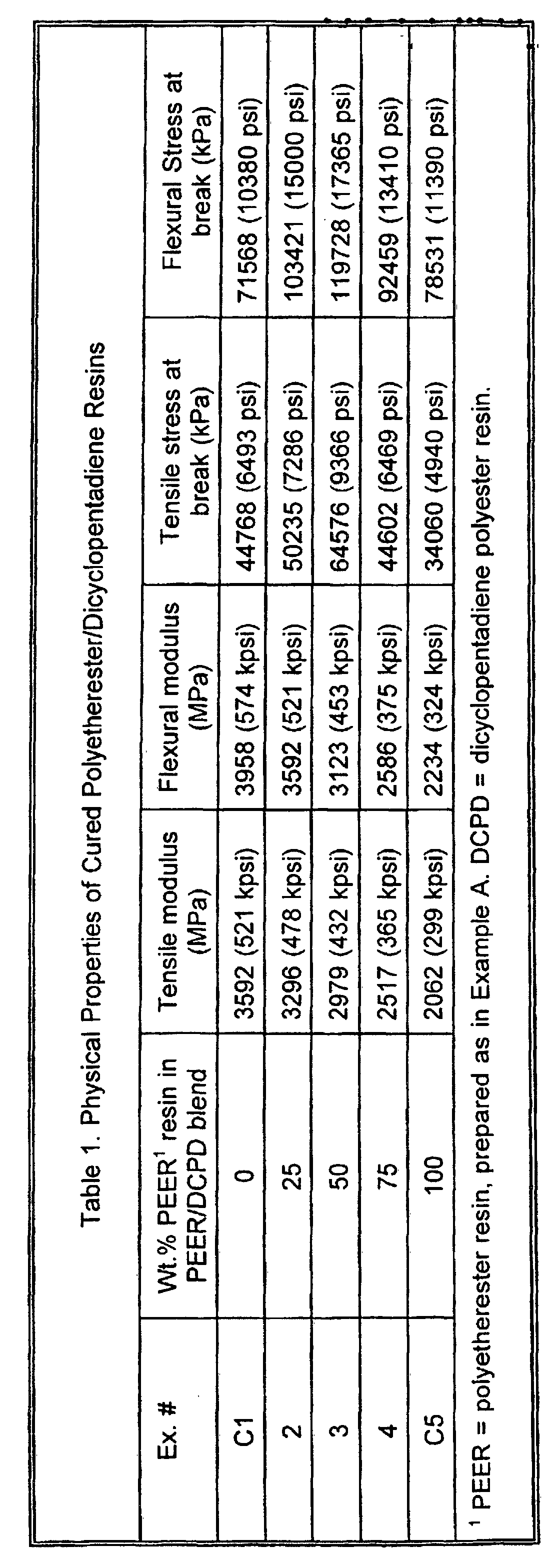

## Claims

1. A polymer blend comprising from 1 to 99 wt.% of an unsaturated polyetherester resin, and from 99 to 1 wt.% of a dicyclopentadiene polyester resin **characterised in that** the unsaturated polyetherester resin is prepared from a polyether polyol and an anhydride or a dicarboxylic acid by an insertion process.

2. A polymer blend as claimed in claim 1 comprising from 25 to 75 wt.% of the unsaturated polyetherester resin and from 75 to 25 wt.% of the dicyclopentadiene polyester resin.

3. A polymer blend as claimed in claim 1 comprising from 40 to 60 wt.% of the unsaturated polyetherester resin and from 60 to 40 wt.% of the dicyclopentadiene polyester resin.

4. A cured thermoset resin made by reacting a polymer blend as claimed in any one of claims 1 to 3 with a vinyl aromatic monomer in the presence of a free-radical initiator.

5. A cured thermoset resin as claimed in claim 4 comprising the reaction product of:
(a) from 30 to 90 wt.% of the polymer blend;
(b) from 10 to 70 wt.% of a vinyl aromatic monomer, both ranges based on the amount of cured thermoset resin; and
(c) a free-radical initiator.

6. A cured resin as claimed in claim 4 or claim 5 **characterised in that** the vinyl aromatic monomer is styrene.

7. A cured thermoset resin as claimed in claim 6 comprising the reaction product of:
(a) from 50 to 70 wt.% of the polymer blend;
(b) from 30 to 50 wt.% of styrene, both ranges based on the amount of cured thermoset resin; and
(c) a peroxide initiator.

8. A cured resin as claimed in any one of claims 4 to 7 having a tensile stress at break greater than 48263 kPa (7000 psi), and a flex stress at break greater than 82737 kPa (12000 psi).

9. A cured resin as claimed in any one of claims 4 to 8 which further includes one or more additives selected from glass fabric, chopped glass, organic fibers, fire retardants, pigments, colorants, mold release agents, inert fillers, low-profile or low-shrink additives, and thickeners.

## Patentansprüche

1. Polymermischung, umfassend 1 bis 99 Gew.-% eines ungesättigten Polyetheresterharzes und 99 bis 1 Gew.-% eines Dicyclopentadienpolyesterharzes, **dadurch gekennzeichnet, dass** das ungesättigte Polyetheresterharz über ein Insertionsverfahren aus einem Polyetherpolyol und einem Anhydrid oder einer Dicarbonsäure hergestellt wird.

2. Polymermischung nach Anspruch 1, umfassend 25 bis 75 Gew.-% des ungesättigten Polyetheresterharzes und 75 bis *25* Gew.-% des Dicyclopentadienpolyesterharzes.

3. Polymermischung nach Anspruch 1, umfassend 40 bis 60 Gew.-% des ungesättigten Polyetheresterharzes und 60 bis 40 Gew.-% des Dicyclopentadienpolyesterharzes.

4. Gehärtetes wärmehärtbares Harz, das durch Umsetzung einer Polymermischung nach einem der Ansprüche 1 bis 3 mit einem vinylaromatischen Monomer in Gegenwart eines freiradikalischen Initiators hergestellt wird.

5. Gehärtetes wärmehärtbares Harz nach Anspruch 4, umfassend das Reaktionsprodukt aus
(a) 30 bis 90 Gew.-% der Polymermischung
(b) 10 bis 70 Gew.-% eines vinylaromatischen Monomers,
wobei sich beide Bereiche auf die Menge des gehärteten wärmehärtbaren Harzes beziehen, und
(c) einem freiradikalischen Initiator

6. Gehärtetes Harz nach Anspruch 4 oder 5, **dadurch gekennzeichnet, dass** das vinylaromatische Monomer Styrol ist.

7. Gehärtetes wärmehärtbares Harz nach Anspruch 6, umfassend das Reaktionsprodukt aus
(a) 50 bis 70 Gew.-% der Polymermischung
(b) 30 bis 50 Gew.-% Styrol,
wobei sich beide Bereiche auf die Menge des gehärteten wärmehärtbaren Harzes beziehen, und
(c) einem Peroxidinitiator.

8. Gehärtetes Harz nach einem der Ansprüche 4 bis 7 mit einer Bruchspannung von mehr als 48.263 kPa (7000 psi) und einer Biegebruchspannung von mehr als 82.737 kPa (12.000 psi).

9. Gehärtetes Harz nach einem der Ansprüche 4 bis 8, das außerdem eines oder mehrere aus Glasfaserstoff, zerstoßenem Glas, organischen Fasern, flammhemmenden Mitteln, Pigmenten, Färbemitteln, Formtrennmitteln, inerten Füllstoffen, Additiven für Maßstabilität und Schrumpfformat sowie Verdickungsmitteln ausgewählte Additive umfasst.

## Revendications

1. Un mélange de polymères comprenant de 1 à 99 % en poids d'une résine polyétherester insaturée, et de 99 à 1 % en poids d'une résine polyester à groupe dicyclopentadiène **caractérisé en ce que** la résine polyétherester insaturée est préparée à partir d'un polyéther polyol et d'un anhydride ou d'un acide dicarboxylique par un procédé d'insertion.

2. Un mélange de polymères selon la revendication 1 comprenant de 25 à 75 % en poids de la résine polyétherester insaturée et de 75 à 25 % en poids de la résine polyester à groupe dicyclopentadiène.

3. Un mélange de polymères selon la revendication 1 comprenant de 40 à 60 % en poids de la résine polyétherester insaturée et de 60 à 40 % en poids de la résine polyester à groupe dicyclopentadiène.

4. Une résine thermodurcie par réticulation préparée en faisant réagir un mélange de polymères selon l'une quelconque des revendications 1 à 3 avec un monomère aromatique de type vinyle en présence d'un amorceur à radicaux libres.

5. Une résine thermodurcie par réticulation selon la revendication 4 comprenant le produit de la réaction de :
(a) de 30 à 90 % en poids du mélange de polymères ;
(b) de 10 à 70 % en poids d'un monomère aromatique de type vinyle, les deux plages étant basées sur la quantité de résine thermodurcie par réticulation ; et
(c) un amorceur à radicaux libres.

6. Une résine durcie selon la revendication 4 ou la revendication 5 **caractérisée en ce que** le monomère aromatique de type vinyle est le styrène.

7. Une résine durcie selon la revendication 6 comprenant le produit de la réaction de :
(a) de 50 à 70 % en poids du mélange de polymères ;
(b) de 30 à 50 % en poids de styrène, les deux plages étant basées sur la quantité de résine thermodurcie par réticulation ; et
(c) un amorceur de type peroxyde.

8. Une résine durcie selon l'une quelconque des revendications 4 à 7 ayant une résistance à la rupture en traction supérieure à 48263 kPa (7000 psi), et une résistance à la rupture en flexion supérieure à 82737 kPa (12000 psi).

9. Une résine durcie selon l'une quelconque des revendications 4 à 8 qui comprend, en outre, un ou plusieurs additifs choisis parmi le verre textile, le verre pilé, les fibres organiques, les ignifugeants, les pigments, les colorants, les agents de démoulage, les charge inertes, les additifs à profil bas ou faible retrait, et les épaississants.
